# EUROPÄISCHE PATENTSCHRIFT

(11) **EP 0 965 904 B1**
(45) Veröffentlichungstag und Bekanntmachung des Hinweises auf die Patenterteilung: **19.01.2000**
(21) Anmeldenummer: 98107963.5
(22) Anmeldetag: 30.04.1998
(51) Int. Cl.: G06F 1/16, A45C 5/12

(54) **Koffer mit integrierten Büro-Arbeitsvorrichtungen**
Carrying case with integrated office devices
Malette de transport comprenant des dispositifs de bureau intégrés

(43) Veröffentlichungstag der Anmeldung: 22.12.1999
(73) Patentinhaber: Intercase AG, 9490 Vaduz (LI)
(72) Erfinder: Keckeis, Werner, 9472 Grabs (CH)
(74) Vertreter: Kurig, Thomas, Dr.

(56) Entgegenhaltungen:
- DE-A- 4 220 051
- US-A- 4 837 590
- US-A- 5 647 484

## Beschreibung

Die Erfindung betrifft einen Bürokoffer mit einem Oberteil und einem daran angelenkten Unterteil, wobei in dem Unterteil ein tragbarer Computer und ein Drucker angeordnet sind.

Ein derartiger Bürokoffer ist aus der US-4,837,590 bekannt. Das Unterteil des bekannten Bürokoffer weist eine Öffnung auf, die durch eine mit Scharnieren angelenkte Klappe verschließbar ist. Nach Öffnen des Oberteils und Inbetriebnahme des Computers kann zum Ausdrucken Papier durch die geöffnete Seitenklappe in den Druckereinzug eingeführt werden.

Ein Nachteil des bekannten Bürokoffers liegt darin, daß nach Öffnen des Bürokoffers zusätzlich die Seitenklappe geöffnet werden muß, um den Betrieb des Druckers zu ermöglichen. Dies ist zeitraubend und umständlich. Außerdem ist zum Anlenken der Seitenklappe ein zusätzlicher Satz von Scharnieren erforderlich, die nur schwer gegen mechanische Beschädigungen geschützt werden können, da diese auf der Außenseite des Unterteils angebracht sind. Für einen ausreichenden Schutz gegen das Eindringen von Staub in den Bürokoffer ist außerdem notwendig, daß die Seitenklappe verhältnismäßig passgenau abdichtet. Dadurch wird die Konstruktion und die Montage des Bürokoffers weiter erschwert. Abgesehen von der umständlichen Handhabung entstehen bei der Herstellung des bekannten Bürokoffers durch die Seitenklappe zusätzliche Kosten.

Weiter ist aus der DE-296 10 578 U1 ein Bürokoffer bekannt, in dessen Unterteil ein Einsatz eingebracht ist. In eine Druckeröffnung des Einsatzes ist der Drucker eingesetzt, während der tragbare Computer auf einem an der Oberseite des Einsatzes angebrachten und zum Drucker hin offenen Podest neben dem Drucker befestigt ist. Das in den Drucker von außen seitlich manuell eingeführte Papier wird vom Drucker in das vom Innenraum des Podestes gebildete Ausgabefach ausgeworfen. Bei einer derartigen Anordnung sind keine zusätzlichen Öffnungen in den Seitenwänden des Oberteils oder Unterteils notwendig, da die Papierführung des Druckerpapiers über die Oberkante des Unterteils hinweg erfolgt.

Es ist jedoch nicht in jedem Fall möglich, den Drucker und den tragbaren Computer bezüglich des Unterteils so hoch anzuordnen, daß die Papierführung des Druckerpapiers nicht durch die Seitenwände des Unterteils behindert wird, insbesondere wenn zusätzliche Bürogeräte wie beispielsweise eine zur Steuerung des tragbaren Computers verwendete Maus oder ein tragbares Telefon im Bürokoffer untergebracht werden sollen.

Ausgehend von diesem Stand der Technik liegt der Erfindung die Aufgabe zugrunde, einen einfach aufgebauten Bürokoffer zu schaffen, der im Unterteil mit den für den Betrieb des Bürokoffers notwendigen Öffnungen versehen ist.

Diese Aufgabe wird erfindungsgemäß dadurch gelöst, daß im Unterteil wenigstens eine Aussparung vorgesehen ist gemâß kennzeichnenden Teil des Anspruchs 1.

Dadurch, daß im Unterteil zum Oberteil hin offene Aussparungen vorgesehen sind, kann insbesondere die Papierführung für das Druckerpapier ohne Rücksicht auf ansonsten störende Seitenwände des Unterteils erfolgen. Folglich besteht auch eine große Entwurfsfreiheit bei der Anordnung des Druckers. Auch bei tiefgelegener Papierauswurfstelle kann beispielsweise der Drucker in einem Einsatz im Unterteil versenkt angeordnet werden, ohne daß die Papierauswurfstelle des Druckers durch eine Seitenwand des Unterteils verdeckt wird. Zwar verliert durch die zum Oberteil hin offenen Aussparungen das Unterteil an Verwindungssteifigkeit, aber dies hat bei einem Bürokoffer keine schwerwiegenden Folgen, denn vor dem Öffnen des Bürokoffers wird das Unterteil des Bürokoffers gewöhnlich auf eine Unterlage gelegt und dann das Oberteil des Bürokoffers geöffnet, so daß während des Öffnungsvorgangs das Unterteil nicht auf Biegungen beansprucht wird. Besonders vorteilhaft ist dabei, daß der Bürokoffer nach dem Öffnen des Oberteils sofort betriebsbereit ist, ohne daß weitere Handgriffe notwendig sind. Im geschlossenen Zustand des Bürokoffers greifen die Verlängerung des Oberteils in die Aussparungen des Unterteils ein, sodaß Oberteil und Unterteil eine mechanische Einheit bilden und das Oberteil das Unterteil gegen Verbiegungen abstützt.

Bei einem bevorzugten Ausführungsbeispiel der Erfindung ist entlang der Oberkante des Unterteils und entlang der Unterkante eine umlaufende Nutfeder- oder Treppenabsatzverbindung vorgesehen. Die Nutfeder- oder Treppenabsatzverbindung schließt den Bürokoffer staub- und spritzwasserdicht ab und erhöht gleichzeitig die Verwindungssteifigkeit des geschlossenen Koffers.

Bei einem weiteren bevorzugten Ausführungsbeispiel ist in das Unterteil ein Einsatz eingebracht. Auf dem Einsatz ist der tragbare Computer befestigt. Seitlich neben dem tragbaren Computer ist in einer Einsatzöffnung ein Drucker versenkt angeordnet, dem aus einem auf der Oberseite des Einsatzes unterhalb des Computers angebrachten Papierfach Papier zuführbar ist. Das Druckerpapier liegt somit ständig am Papiereinzug des Druckers an und braucht nicht von Hand dem Drucker zugeführt werden.

In einer weiteren bevorzugten Ausführungsform ist der Einsatz zweiteilig ausgebildet. Dies ist fertigungstechnisch bevorzugt. Der Papierschacht ist zwischen den beiden Teilen gebildet.

Nachfolgend wird ein Ausführungsbeispiel der Erfindung näher anhand der Zeichnung beschrieben. Es zeigen:
Fig. 1 eine perspektivische Ansicht eines geöffneten Bürokoffers;
Fig. 2 eine Explosionsdarstellung des Bürokoffers aus Figur 1;
Fig. 3 eine Seitenansicht des Bürokoffers aus Figur 1 und 2; und
Fig. 4 eine Querschnittsansicht entlang der Schnittlinie IV-IV in Figur 1.
Fig. 5 zeigt perspektivisch ein Einsatzunterteil bei einer Ausführungsform eines zweiteiligen Einsatzes.
Fig. 6 zeigt perspektivisch ein Einsatzoberteil bei der zweiteiligen Ausführung des Einsatzes.

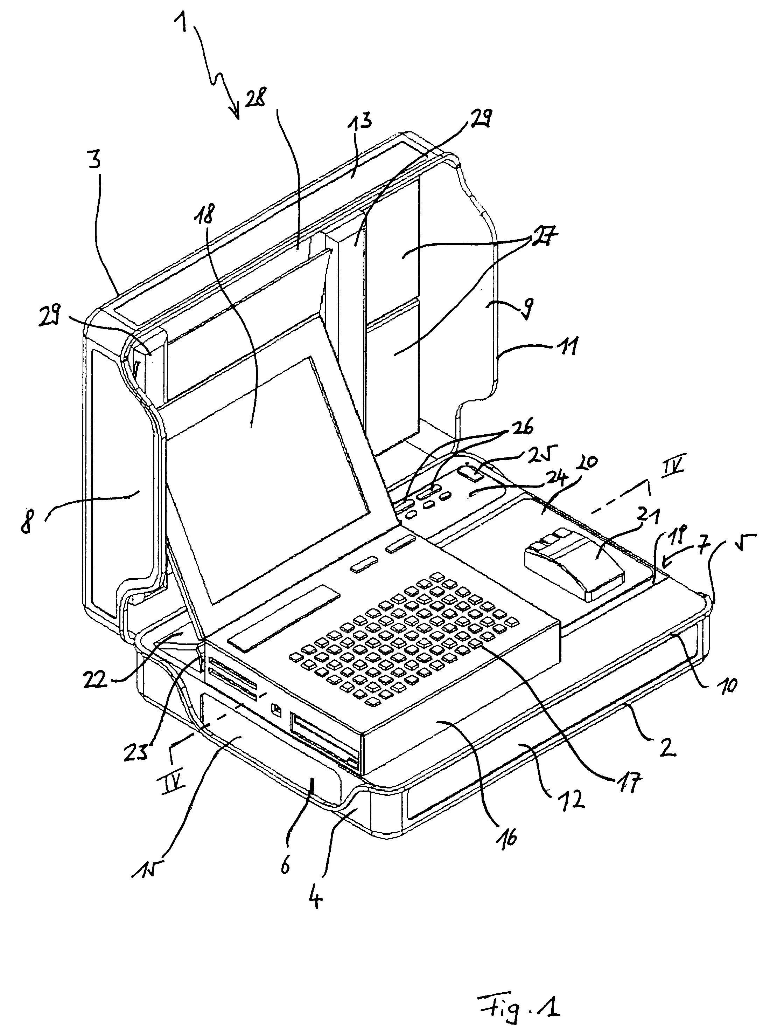

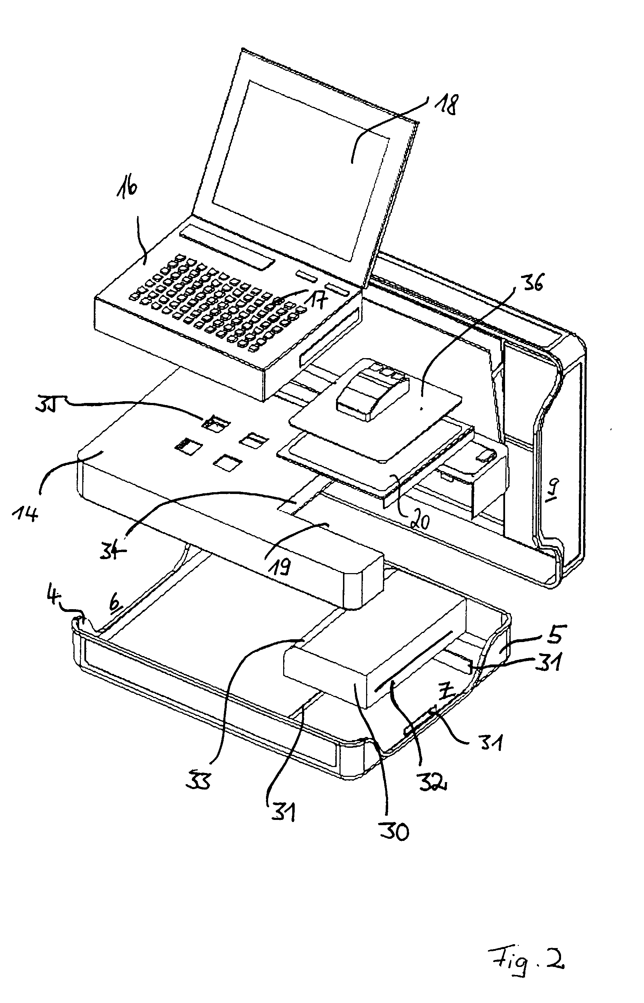

Fig. 1 und 2 zeigen einen Bürokoffer 1 mit einem wannenförmigen hohlen Unterteil 2 und einem entsprechenden Oberteil 3. Das Unterteil 2 weist in lateralen Seitenwänden 4 und 5 längliche Aussparungen 6 und 7 auf, in die herabgezogene Verlängerungen 8 und 9 des Oberteils im geschlossenen Zustand passgenau eingreifen. Entlang einer Oberkante 10 des Unterteils 2 und einer Unterkante 11 des Oberteils 3 ist eine umlaufende Nutfederverbindung oder Treppenstufenverbindung vorgesehen, die im geschlossenen Zustand den Bürokoffer staub- und spritzwasserfest abdichtet und dessen Verwindungssteifigkeit erhöht.

Auf einer Stirnseite 12 des Unterteils 2 und einer Stirnseite 13 des Oberteils 3 können in der Zeichnung nicht dargestellte Griffelemente zum Tragen des Bürokoffers 1 sowie Schließvorrichtungen zum Verschließen des Bürokoffers 1 vorgesehen sein.

In das Unterteil 2 des Bürokoffers 1 ist ein Einsatz 14 eingebracht, der zur Aussparung 6 hin mit einem Hohlraum 15 ausgestattet ist. In dem Hohlraum 15 ist ein Kabelschacht mit zusätzlicher Steckdose (z. B. für Handy-Netzteil) vorgesehen. Auf dem Einsatz 14 ist ein tragbarer Computer 16 befestigt, der über eine Tastatur 17 und einen Bildschirm 18 verfügt. Für den Computer 16 kommen Modelle unterschiedlicher Größe in Frage. Der Computer 16 kann ein Laptop, ein elektronisches Notizbuch (Notebook) oder auch ein größeres Exemplar mit beispielsweise einer Bildschirmdiagonalen von 15 Zoll sein. Seitlich neben dem Computer 16 ist in dem Einsatz 14 eine Druckeröffnung 19 ausgebildet, die in Figur 2 von einer Druckerabdeckung 20 abgedeckt ist, auf der eine Maus 21 zur Steuerung des Computers verfahren werden kann. Über die Druckeröffnung 19 kann nach Abnahme der Druckerabdeckung 20 Papier in einen im Einsatz 14 gebildeten Papierschacht 34 eingelegt werden.

Hinter dem Computer 16 befindet sich eine Kabelschachtabdeckung 22, durch die an den Schnittstellen des Computers 16 angeschlossene Schnittstellenkabel 23 durch einen im Einsatz 14 ausgebildeten Kabelschacht zu einer Schalter- und Anschlußblende 24, auf der Schalter 25 und Steckverbindungen 26 ausgebildet sind, geführt werden. Auf der plattenförmigen Schalterblende 24 sind alle standardisierten I/O-Schnittstellen für externe Peripheriegeräte, ein EIN/AUS-Schalter sowie ein CAR-Adapter zum Anschluß an die Stromversorgung (12V) aus dem Kfz untergebracht.

Im Oberteil 3 des Bürokoffers 1 sind ferner Ablagebehälter 27 sowie eine Dokumentenablage 28 zur Ablage von Büromaterial vorgesehen. Ferner sind auf der Innenseite des Oberteils 3 Andrückelemente 29 vorgesehen, die im geschlossenen Zustand des Bürokoffers 1 den Computer 16 gegen den Einsatz 14 vorspannen und auf diese Weise sichern.

Figur 2 zeigt eine Explosionszeichnung des Bürokoffers aus Figur 1. Wie in Figur 2 erkennbar ist, wird ein Drucker 30 im Unterteil 2 von länglichen Druckerleisten 31 gehalten. Der Drucker 30 verfügt über einen Papierauswurfschlitz 32, durch den das von einem Papiereinzug 33 in den Drucker 30 eingezogene und dort bedruckte Papier ausgeworfen wird. Das für den Drucker 30 bestimmte Papier wird dem Papiereinzug 33 aus dem Papierschacht 34 zugeführt. Der Papierschacht 34 ist auf der Unterseite des Einsatzes 14 unterhalb des Computers 16 angeordnet und kann durch die in Figur 2 erkennbare Druckeröffnung 19 von oben mit Papier versorgt werden. Von dort aus wird das Druckerpapier in den Papiereinzug 33 eingelegt und mit einer Papierführung lagerichtig arretiert.

Ferner sind im Einsatz 14 Befestigungslöcher 35 vorgesehen, durch die am Computer 16 angebrachte Befestigungslaschen zur Befestigung des Computers 16 hindurchgezogen werden können. Außerdem ist in Figur 2 erkennbar, daß auf der Druckerabdeckung 20 eine Mausunterlage 36 zur Abstützung der Maus 21 aufgebracht ist.

Unter dem Einsatz 14 ist weiterhin ein Hohlraum 15 gebildet für die zur Stromversorgung des Computers 16 und des Druckers 30 notwendigen Aggregate, die über nicht dargestellte, sich in dem Hohlraum bzw. Kabelstauraum 15 befindende Buchsen, an eine externe Stromversorgung oder an Akkumulatoren angeschlossen werden können. Der ungefüllte Hohlraum unter dem Einsatz 14 kann aber auch zum Verstauen von zusätzlichen Bürogeräten wie beispielsweise einem tragbaren Telefon verwendet werden.

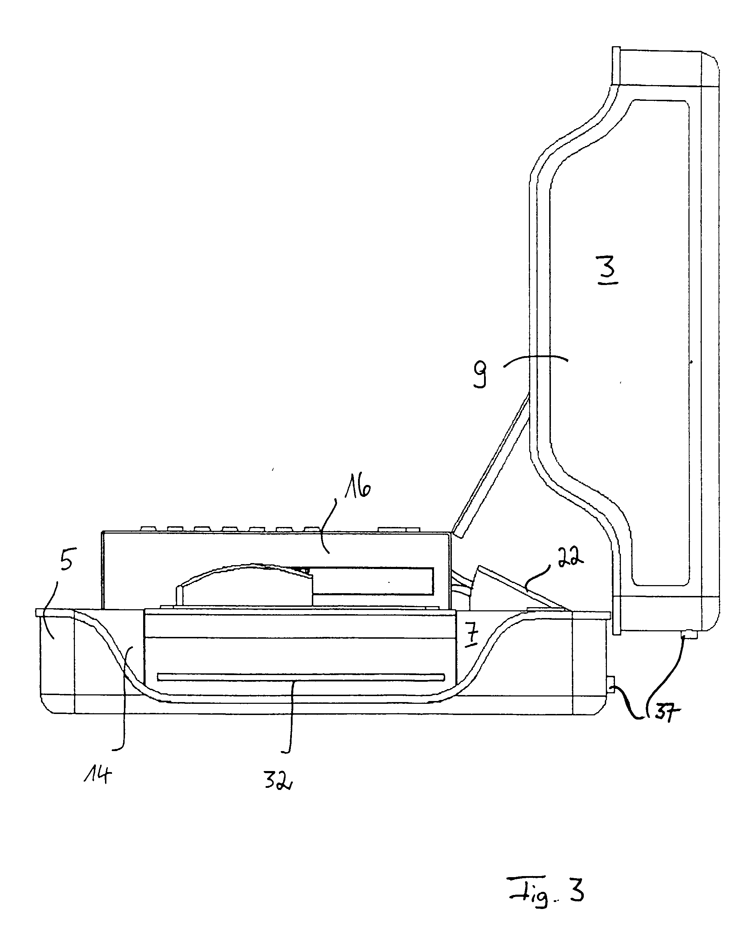

Figur 3 zeigt eine Seitenansicht des Bürokoffers 1 von Figuren 1 und 2. Wie sich Figur 3 entnehmen läßt, entspricht die Breite der Aussparung 7 in der Seitenwand 5 des Unterteils 2 der Breite des Papierauswurfschlitzes 32, der sich in einem unteren Abschnitt des Druckers 30 befindet.

Ferner sind in Figur 3 Noppen 37 zu erkennen, die beim Abstellen des geschlossenen Bürokoffers die nicht dargestellten, das Unterteil 2 mit dem Oberteil 3 verbindenden Scharniere schützen.

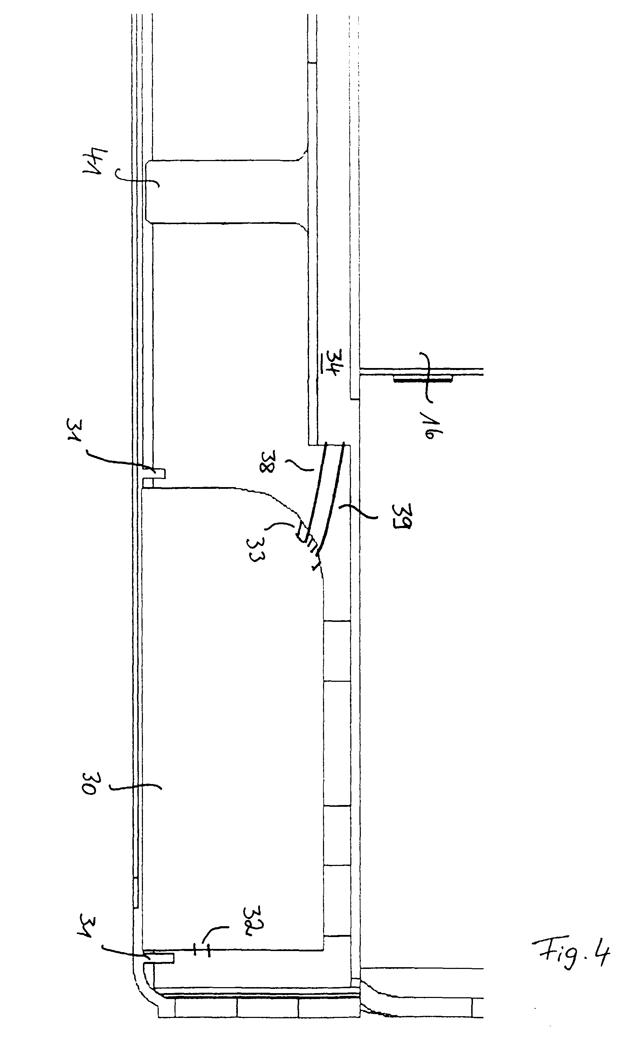

Figur 4 stellt einen Querschnitt entlang der Schnittlinie IV-IV in Figur 1 dar. Zur Versorgung des Druckers 30 mit Papier werden Papierbögen 39 in den Papierschacht soweit eingeschoben, daß der Papierstapel am Papiereinzug 33 anliegt. In Figur 4 ist der Papierstapel durch einen unteren Papierbogen 38 und einen oberen Papierbogen 39 angedeutet. Das in den Drucker 30 eingezogene und bedruckte Papier kann über die Papierauswurfstelle 32 des Druckers 30 und die Aussparung 7 in der Seitenwand 5 des Unterteils 2 ungehindert den Bürokoffer verlassen. Falls der Papiereinzug 33 des Druckers 30 auch zum Einzug von einzuscannenden Papierbögen verwendet wird, läßt sich der durch den unteren Papierbogen und oberen Papierbogen 39 angedeutete Papierstapel in den Papierschacht 34 zurückschieben und daraufhin der einzuscannende Papierbogen in den Papiereinzug 33 einlegen.

Während des Transports des Bürokoffers 1 wird das Papier vom Papiereinzug 33 und den Seitenwänden des Papierschachtes 34 gehalten. Durch die Papierführung im Bürokoffer 1 kann jederzeit ein Ausdruck vorgenommen werden, ohne daß ein Papierbogen an einen Papiereinzug eines Druckers angelegt werden muß. Ferner entfällt die Notwendigkeit eines separaten Behälters für die Aufbewahrung des Druckerpapiers, da der Papierschacht auch zur Bevorratung mit Druckerpapier dient.

Der auf einer Unterseite des Einsatzes 14 vorgesehene Papierschacht 34 erfüllt zusätzlich die Funktion, den Einsatz 14 im Bereich des Computers 16 zu versteifen, um ein Durchbiegen des Einsatzes 14 im Bereich des Computers 16 zu verhindern. Zu diesem Zweck sind außerdem Stützen 41 vorgesehen, die zusätzlich den Raum unter dem Papierschacht 34 unterteilen, um so jeweils einen getrennten Raum für den Kabelschacht für die zur Versorgung des Computers 16 und des Druckers erforderlichen Netztteile und einen Stauraum zu schaffen.

Um schließlich das Unterteil 2 gegen Verwindungen zu versteifen, kann der Einsatz 14 fest mit dem Unterteil 1 verbunden sein. Dies ist jedoch nicht zwingend notwendig, da im allgemeinen der Bürokoffer 1 vor dem Öffnen mit seinem Unterteil 2 auf eine Unterlage aufgelegt wird und daraufhin das Oberteil 3 geöffnet wird. Während des Öffnungsvorgangs liegt somit das Unterteil 2 auf einer Auflage. Auf einer solchen Auflage besteht aber nicht die Gefahr, daß sich das Unterteil 2 verwindet. Im geschlossenen Zustand greifen aber die Verlängerungen 8 und 9 in die Aussparungen 6 und 7 des Unterteils 2 ein, so daß das Unterteil 2 und das Oberteil 3 eine mechanische Einheit mit hoher Verwindungssteifigkeit bilden. Ein nicht mit dem Unterteil 2 fest verbundener Einsatz 14 kann aber ohne Mühe aus dem Unterteil 2 herausgenommen werden und die unter dem Einsatz 14 angeordneten Teile sind frei zugänglich. Das ist dann von Vorteil, wenn beispielsweise die unter dem Einsatz 14 angeordneten Batterien ausgetauscht werden oder wenn der Computer 16 zum Öffnen der durch die Befestigungslöcher 35 hindurchgeführten Befestigungslaschen vom Einsatz 14 gelöst werden soll. Auch der Drucker 30 läßt sich auf einfache und bequeme Weise aus dem Unterteil 2 entnehmen. Dazu genügt es, wenn der Benutzer mit der Hand die Abdeckungen 20 und 36 entnimmt. Mit der anderen Hand kann der Benutzer dann unter den Drucker 30 greifen und ihn aus der Druckeröffnung 19 entnehmen.

Der Drucker kann so tief angeordnet werden, daß über ihm Platz für die Druckerabdeckung 20 und die Mausunterlage 36 ist. Der Benutzer kann somit zur Steuerung des Mauszeigers die Maus 21 verwenden und ist nicht auf die häufig unbequeme Steuerung des Mauszeigers am tragbaren Computer 16 angewiesen.

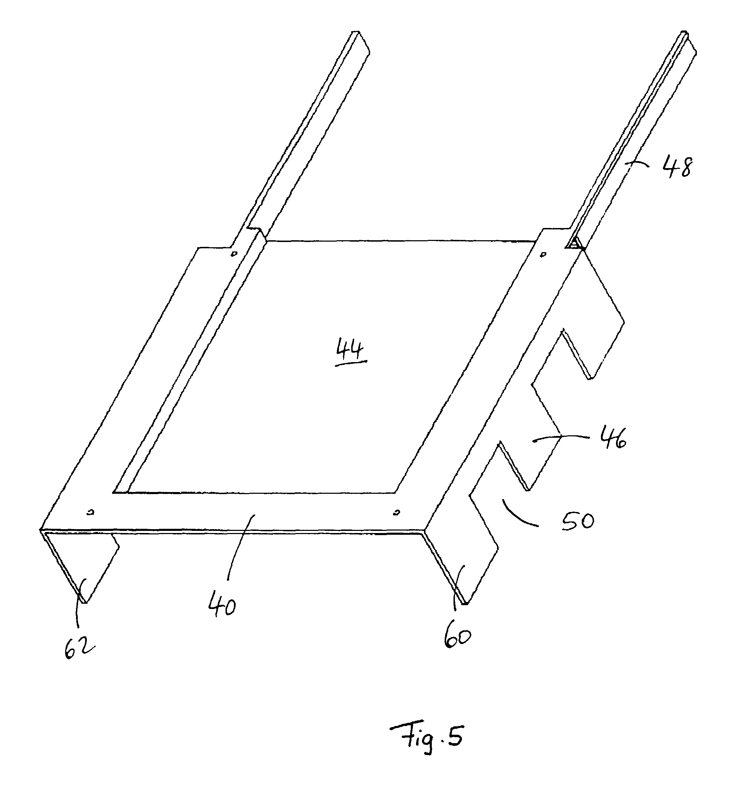

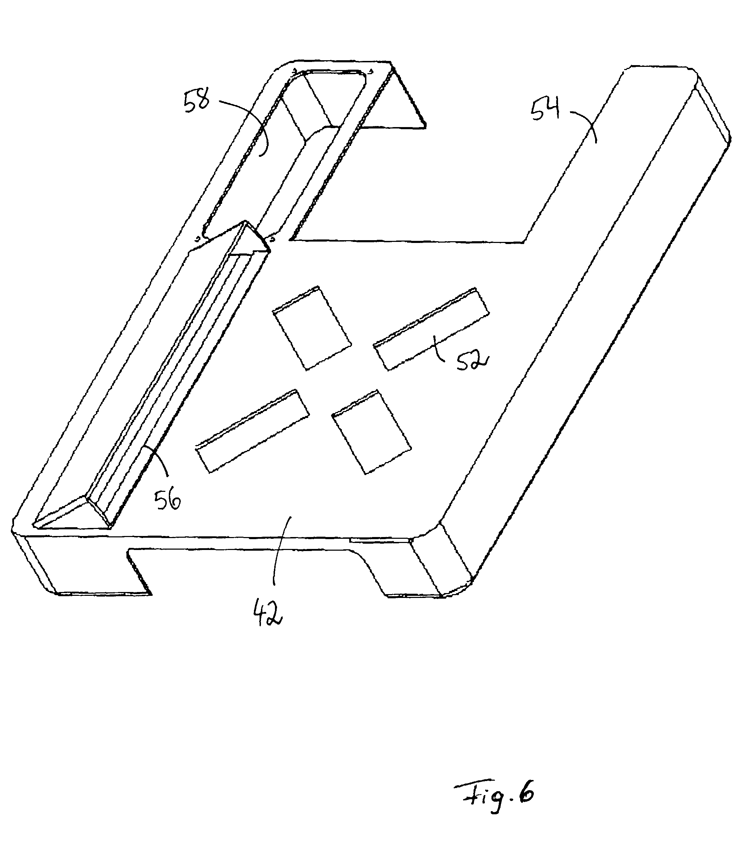

In Figur 5 und 6 sind ein Einsatzunterteil 5 und ein Einsatzoberteil 6 hinsichtlich einer zweiteiligen Ausbildung des Einsatzes dargestellt. Das Einsatzoberteil 42 wird über dem Einsatzunterteil 40 angeordnet und bildet in dieser Ausgestaltung einen Ersatz für den in den Figuren 1 bis 4 dargestellten einteiligen Einsatz 14. Im Einsatzunterteil ist eine großflächige Vertiefung 44 vorgesehen, die im Zusammenwirken mit der Unterseite des Einsatzoberteiles 42 einen Papierschacht definiert, der mit dem seitlich angeordneten Drucker 30 zusammenwirkt. Ferner sind an dem Einsatzunterteil zwei einander gegenüberliegende und parallel angeordnete Schienen 48 vorgesehen, die zur Arretierung des Druckers 30 dienen. Das Einsatzunterteil 40 steht auf zwei mit Ausnehmungen 50 und mit Stegen 46 versehenen im wesentlichen vertikal angeordneten Halteteilen 60, 62. Die Ausnehmungen 50 dienen als Offnungen für Kabelführungen etc.. Unterhalb und zwischen den Halteteilen 60, 62 ist ein Hohlraum für Akkus, Kabel, etc. gebildet.

Das Einsatzoberteil 42 ist im Zusammenhang mit dem Einsatz 14 bereits beschrieben. Es ist ein Schacht 58 zur Aufnahme von Anschlußelementen 24, 25, 26 gebildet sowie eine Kabelabdeckung 56. Ferner sind an der Oberseite des Einsatzoberteils 42 sternförmig angeordnete Befestigungsöffnungen 52 gebildet.

## Patentansprüche

1. Bürokoffer (1) mit einem Oberteil (3) und einem daran angelenkten Unterteil (2), wobei in dem Unterteil (2) ein tragbarer Computer (16) und ein Drucker (30) angeordnet sind, **dadurch gekennzeichnet, daß** mindestens eine zum Oberteil hin offene und durch eine Verlängerung (8; 9) des Oberteils schließbare bzw. abdeckbare Aussparung (6; 7) in einer lateralen Seitenwand (4; 5) des Unterteils (2) vorgesehen ist, durch die Druckerpapier ausgegeben bzw. eingegeben werden kann.

2. Bürokoffer nach Anspruch 1, **dadurch gekennzeichnet, daß** sich die Aussparung (7) im Unterteil im Bereich einer Papierauswurfstelle (32) des Druckers (30) befindet.

3. Bürokoffer nach Anspruch 1 oder 2, **dadurch gekennzeichnet, daß** in das Unterteil (2) des Bürokoffers ein Einsatz (14) einsetzbar ist.

4. Bürokoffer nach Anspruch 3, **dadurch gekennzeichnet, daß** der Einsatz (14) zur Verstärkung des Unterteils fest mit dem Unterteil (2) verbunden ist.

5. Bürokoffer nach Anspruch 3 oder 4, d**adurch gekennzeichnet, daß** der tragbare Computer (16) auf dem Einsatz (14) angeordnet ist.

6. Bürokoffer nach einem der Ansprüche 3 bis 5, **dadurch gekennzeichnet, daß** der Drucker (30) in einer Druckeröffnung (19) im Einsatz (14) versenkt angeordnet ist.

7. Bürokoffer nach einem der Ansprüche 3 bis 6, **dadurch gekennzeichnet, daß** die zum Betrieb des tragbaren Computers (16) und des Druckers (30) notwendige Stromversorgung im Hohlraum (15) unter dem Einsatz (14) angeordnet ist.

8. Bürokoffer nach einem der Ansprüche 1 bis 7, **dadurch gekennzeichnet, daß** der Drucker (30) seitlich neben dem tragbaren Computer mit zur Längsachse des Koffers querverlaufender Papiereinzugsrichtung angeordnet ist.

9. Bürokoffer nach Anspruch 5, 6 und 8, **dadurch gekennzeichnet, daß**, ein Papierschacht (34) an einer Oberseite des Einsatzes vorgesehen ist.

10. Bürokoffer nach einem der Ansprüche 1 bis 9, **dadurch gekennzeichnet, daß** im Einsatz (14) eine Blende (24) für Schnittstellenanschlüsse und Schalter vorgesehen ist.

11. Bürokoffer nach einem der Ansprüche 1 bis 10, **dadurch gekennzeichnet, daß** eine Abdeckung (20) des Druckers vorgesehen ist, die als Unterlage für eine Maus zur Steuerung des tragbaren Computers dient.

12. Bürokoffer nach einem der vorhergehenden Ansprüche, **dadurch gekennzeichnet, daß** der Einsatz (40, 42) zweiteilig ausgebildet ist, wobei ein Einsatzunterteil (40) vorgesehen ist, das eine Vertiefung (44) zur Bildung des Papierschachtes aufweist, sowie zwei Schienen (48) zur Arretierung des Druckers (30).

13. Bürokoffer nach Anspruch 12, **dadurch gekennzeichnet, daß** ein Einsatzoberteil (42) vorgesehen ist, das einen Schacht (58) für Anschlußelemente (24, 25, 26) aufweist.

## Claims

1. An attaché case (1) comprising a top part (3) and a bottom part (2) hinged thereto, a portable computer (16) and a printer (30) being arranged in the lower part (2), characterized by the provision of at least one recess (6; and 7), which is open toward the top part and is able to be closed or covered over by an extension (8; and 9) of the top part, in a side wall (4; and 5) of the bottom part (2), through which recess printer paper can be moved in or moved out.

2. The attaché case as claimed in claim 1, characterized in that the recess (7) is located in the bottom part adjacent to the paper ejection point (32) of the printer (30).

3. The attaché case as claimed in claim 1 or in claim 2, characterized in that an insert (14) is able to be inserted in the bottom part (2) of the attaché case.

4. The attaché case as claimed in claim 3, characterized in that the insert (14) is fixedly connected with the bottom part (2) for reinforcement of the bottom part.

5. The attaché case as claimed in claim 3 or in claim 4, characterized in that the portable computer (16) is arranged on the insert (14).

6. The attaché case as claimed in any one of the claims 3 through 5, characterized in that the printer (30) is received within a printer opening (19) in the insert (14).

7. The attaché case as claimed in any one of the claims 3 through 6, characterized in that the power supply necessary for operation of the portable computer (16) and of the printer (30) is arranged in the cavity (15) underneath the insert (14).

8. The attaché case as claimed in any one of the claims 1 through 7, characterized in that the printer (30) is arranged laterally adjacent to the portable computer with a paper draw-in means athwart the longitudinal axis of the attaché case.

9. The attaché case as claimed in claims 5, 6 and 8, characterized in that a paper passage (34) is provided on a top side of the insert.

10. The attaché case as claimed in any one of the claims 1 through 9, characterized in that a cover (24) is provided in the insert (14) for interface connections and switches.

11. The attaché case as claimed in any one of the claims 1 through 10, characterized in that a printer cover (20) is provided, which serves as a pad for a mouse for operation of the portable computer.

12. The attaché case as claimed in any one of the preceding claims, characterized in that the insert (40 and 42) is made in two parts, one insert part (40) being provided, which has a recess (44) for the formation of the paper passage, and two rails (48) for holding the printer (30) in place.

13. The attaché case as claimed in claim 12, characterized in that an insert top part (42) is provided, which has a passage (58) for connection elements (24, 25 and 26).

## Revendications

1. Mallette de bureau (1) comprenant une partie supérieure (3) et une partie inférieure (2) articulée à la première, un ordinateur portable (16) et une imprimante (30) étant disposés dans la partie inférieure (2), caractérisée en ce qu'au moins un évidement (6; 7) ouvert dans la direction de la partie supérieure et pouvant être fermé respectivement recouvert par un prolongement (8; 9) de la partie supérieure, est prévu dans une paroi latérale (4; 5) de la partie inférieure (2), par lequel le papier de l'imprimante peut être sorti respectivement introduit.

2. Mallette de bureau selon la revendication 1, caractérisée en ce que l'évidement (7) se trouve dans la partie inférieure dans la région d'un emplacement d'expulsion du papier (32) de l'imprimante (30).

3. Mallette de bureau selon la revendication 1 ou 2, caractérisée en ce qu'un accessoire (14) peut être installé dans la partie inférieure (2) de la mallette de bureau.

4. Mallette de bureau selon la revendication 3, caractérisée en ce que l'accessoire (14) est relié de façon rigide à la partie inférieure (2) pour renforcer la partie inférieure.

5. Mallette de bureau selon la revendication 3 ou 4, caractérisée en ce que l'ordinateur portable (16) est disposé sur l'accessoire (14).

6. Mallette de bureau selon l'une quelconque des revendications 3 à 5, caractérisée en ce que l'imprimante (30) est disposée plongée dans une ouverture d'imprimante (19) dans l'accessoire (14).

7. Mallette de bureau selon l'une quelconque des revendications 3 à 6, caractérisée en ce que l'alimentation électrique nécessaire pour le fonctionnement de l'ordinateur portable (16) et de l'imprimante (30) est disposée dans l'espace vide (15) situé sous l'accessoire (14).

8. Mallette de bureau selon l'une quelconque des revendications 1 à 7, caractérisée en ce que l'imprimante (30) est disposée latéralement à côté de l'ordinateur portable, la direction de l'introducteur de papier étant disposée transversalement par rapport à l'axe longitudinal de la mallette.

9. Mallette de bureau selon l'une quelconque des revendications 5, 6 et 8, caractérisée en ce que le bac à papier (34) est prévu sur une face supérieure de l'accessoire.

10. Mallette de bureau selon l'une quelconque des revendications 1 à 9, caractérisée en ce qu'un cache (24) est prévu pour les raccordements d'interfaces et les interrupteurs.

11. Mallette de bureau selon l'une quelconque des revendications 1 à 10, caractérisée en ce qu'un recouvrement (20) de l'imprimante est prévu, qui sert de support pour une souris pour la commande de l'ordinateur portable.

12. Mallette de bureau selon l'une quelconque des revendications précédentes, caractérisée en ce que l'accessoire (40, 42) est en deux parties, une partie inférieure d'accessoire (40) présentant un creux (44) pour former le bac à papier ainsi que deux rails (48) pour immobiliser l'imprimante (30).

13. Mallette de bureau selon la revendication 12, caractérisée en ce qu'une partie supérieure d'accessoire (42) est prévue, qui présente un puits (58) pour des éléments de raccordement (24, 25, 26).
